# EUROPEAN PATENT APPLICATION

(11) **EP 4 636 854 A1**
(43) Date of publication of application: **22.10.2025**
(21) Application number: 23904032.2
(22) Date of filing: 14.12.2023
(51) Int. Cl.: H01M 4/36, H01M 4/525, H01M 4/62, H01M 4/131, H01M 10/052, C01G 53/00, H01M 4/02

(54) **CATHODE ACTIVE MATERIAL FOR ALL-SOLID-STATE BATTERY, MANUFACTURING METHOD THEREFOR, AND ALL-SOLID-STATE BATTERY INCLUDING SAME**

(30) Priority: 16.12.2022 KR 20220177625
(71) Applicant: POSCO Holdings Inc., Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: MOON, Ji Woong, Pohang-si, Gyeongsangbuk-do 37673 (KR); EUN, Tai Hee, Pohang-si, Gyeongsangbuk-do 37671 (KR); PARK, Yooncheol, Pohang-si, Gyeongsangbuk-do 37673 (KR); YUN, Jeongsik, Busan 46516 (KR); LEE, Jae Myung, Pohang-si, Gyeongsangbuk-do 37673 (KR); SONG, Jung Hoon, Gwacheon-si, Gyeonggi-do 13835 (KR); NAM, Sang Cheol, Seoul 02587 (KR)
(74) Representative: Pfenning, Meinig & Partner mbB
(86) International application number: PCT/KR2023/020668
(87) International publication number: WO 2024/128833

(57) **Abstract**

The present invention relates to a positive electrode active material for an all-solid-state battery, comprising: a core comprising a lithium transition metal oxide; and a coating layer disposed on the core and comprising a lithium boron oxide, wherein a molar ratio of lithium to boron (Li:B) in the lithium boron oxide is from 3:7 to 3:9.

## Description

### FIELD OF THE INVENTION

The present invention relates to a positive electrode active material for an all-solid-state battery, a method for preparing the same, and an all-solid-state battery comprising the same, and more particularly, to a positive electrode active material for an all-solid-state battery with improved charge and discharge capacity, a method for preparing the same, and an all-solid-state battery comprising the same.

### DESCRIPTION OF THE RELATED ART

Recently, in the lithium battery market, the development of lithium secondary batteries with enhanced safety and high gravimetric and volumetric energy density has become increasingly important, in response to growing demands for extended driving range and improved safety of electric vehicles. In particular, since the energy capacity required for electric vehicle applications is on the order of several tens of kWh, damage to the battery may result in large-scale fire or explosion. Accordingly, extensive research is being conducted to replace liquid electrolytes with solid electrolytes.

In particular, all-solid-state batteries generally adopt a structure in which a solid electrolyte is applied as a secondary electrolyte within the positive electrode to form a lithium-ion conduction pathway, thereby facilitating manufacture. Among solid electrolytes, sulfide-based solid electrolytes are widely studied due to their high ionic conductivity and excellent densification capability through pressure-induced deformation.

As for the positive electrode active materials used in combination with such sulfide-based solid electrolytes, layered oxide-based positive electrode active materials, such as NCM-based or NCA-based materials, which are commonly used in lithium-ion batteries, have recently been predominantly employed. However, these positive electrode active materials tend to react at the interface with sulfide-based solid electrolytes to form a resistive interfacial layer. To prevent such interfacial reactions and improve performance, ongoing research is being conducted on surface-coating the active materials with lithium zirconium oxide or lithium niobium oxide.

### TECHNICAL PROBLEM

An object of the present invention is to provide a positive electrode active material for an all-solid-state battery, a method for preparing the same, and an all-solid-state battery comprising the same, which can prevent the formation of a resistive interfacial layer and improve the charge and discharge capacity of the battery.

### TECHNICAL SOLUTION

According to one embodiment of the present invention, there is provided a positive electrode active material for an all-solid-state battery, comprising: a core comprising a lithium transition metal oxide; and a coating layer disposed on the core and comprising a lithium boron oxide, wherein a molar ratio of lithium to boron (Li:B) in the lithium boron oxide is from 3:7 to 3:9.

The lithium transition metal oxide may contain nickel in an amount of 75 mol% or more based on the total molar amount of transition metals.

The core may be a secondary particle formed by aggregation of a plurality of primary particles.

The lithium transition metal oxide may be represented by the following Chemical Formula 1:

**[Chemical Formula 1]** Liₐ[Niₓ₁Co_{γ1}Mz₁]O₂

wherein 1.01 ≤ a ≤ 1.07, 0.75 ≤ x₁ ≤ 0.90, 0 ≤ y₁ ≤ 0.20, 0 < z₁ ≤ 0.20, and x₁ + y₁ + z₁ = 1; M is at least one selected from the group consisting of Mn, Al, Mg, Ti, Nb, W, Sc, Zr, Si, V, Fe, Y, and Mo.

The lithium boron oxide may be represented by the following Chemical Formula 2:

**[Chemical Formula 2]** Li₃Bₓ₂O_{γ2}

wherein 7 ≤ x₂ ≤ 9, and 0 < y₂ ≤ 12.

The lithium boron oxide may be Li₃B₈Oₓ₃, where x₃ is from 13 to 14.

The content of the coating layer may be from 0.05 wt% to 0.3 wt% based on the total weight of the positive electrode active material.

An average particle diameter (D50) of the positive electrode active material may be from 1 µm to 10 µm.

A specific surface area of the positive electrode active material may be from 0.4 m²/g to 0.7 m²/g.

Another embodiment of the present invention provides a method for preparing a positive electrode active material for an all-solid-state battery, the method comprising:
preparing a lithium transition metal oxide; preparing a coating solution comprising a lithium precursor and a boron precursor, wherein a molar ratio of lithium to boron (Li:B) is from 3:7 to 3:9; mixing the lithium transition metal oxide with the coating solution to form a mixture;
drying the mixture; and calcining the dried mixture to form a coating layer.

In the step of preparing the coating solution, the lithium precursor may be lithium metal, lithium hydroxide, lithium carbonate, lithium alkoxide, or a combination thereof.

In the step of preparing the coating solution, the boron precursor may be triisopropyl borate, boric acid (H₃BO₃), or a combination thereof.

In the step of drying the mixture, the drying may be performed by vacuum drying.

In the step of forming the coating layer, the calcination may be performed at a temperature of 250°C to 350°C.

Another embodiment of the present invention provides a positive electrode comprising the above-described positive electrode active material for an all-solid-state battery.

Yet another embodiment of the present invention provides an all-solid-state battery comprising: a positive electrode; a negative electrode; and a solid electrolyte layer interposed therebetween, wherein the positive electrode comprises the above-described positive electrode active material for an all-solid-state battery.

### ADVANTAGEOUS EFFECTS

The positive electrode active material for an all-solid-state battery according to one embodiment of the present invention can prevent the formation of a resistive interfacial layer and improve the charge and discharge capacity of the battery by comprising a lithium boron oxide coating layer.

### BRIEF DESCRIPTION OF THE DRAWINGS

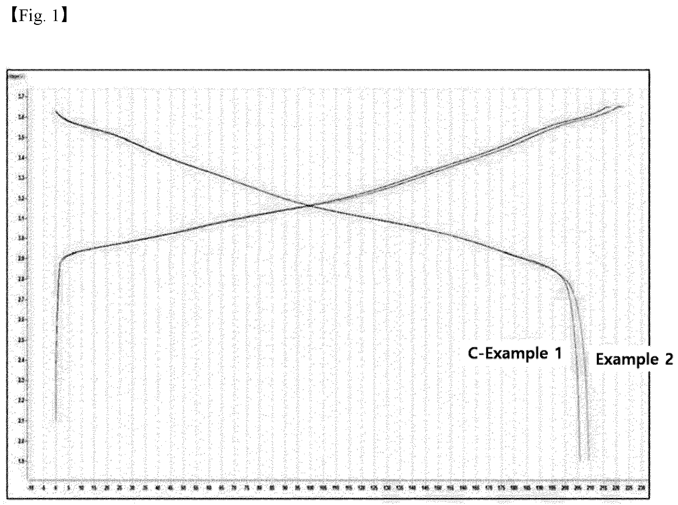

FIG. 1 is a graph showing the charge and discharge capacity curves of lithium secondary batteries prepared according to Example 2 and Comparative Example 1.

### DETAILED DESCRIPTION OF THE EMBODIMENTS

The terms such as "first", "second", and "third" may be used to describe various components, elements, regions, layers, and/or sections, but are not limited thereto. These terms are used merely to distinguish one element, component, region, layer, or section from another. Therefore, a "first" element, component, region, layer, or section described below may be referred to as a "second" element, component, region, layer, or section without departing from the scope of the present invention.

Technical terms used herein are intended only to describe specific embodiments and are not intended to limit the scope of the present invention. The singular forms "a", "an", and "the" as used herein include plural referents unless the context clearly dictates otherwise. As used herein, the term "comprising/including/containing/involving/having" specifies the presence of stated features, integers, steps, operations, elements, and/or components but does not preclude the presence or addition of one or more other features, integers, steps, operations, elements, components, and/or groups thereof.

When a part is referred to as being "on" or "above/over" another part, it may be directly on or above/over the other part, or intervening elements may be present. In contrast, when a part is referred to as being "directly on" or "directly above/over" another part, there are no intervening elements present between them.

Unless otherwise defined, all technical and scientific terms used herein have the same meaning as commonly understood by one of ordinary skill in the art to which the invention belongs. Generally used terms are to be interpreted in accordance with their meanings consistent with relevant technical literature and the context of the present disclosure, and are not to be interpreted in an overly idealized or strictly formal sense unless expressly so defined.

Further, unless otherwise specified, "%" refers to weight percent (wt%), and 1 ppm means 0.0001 wt%.

As used herein, the phrase "combinations thereof" in a Markush-type expression means any combination or mixture of one or more of the listed components selected from the group, and includes at least one component selected from the group consisting of the listed components.

Hereinafter, embodiments of the present invention will be described in detail such that those skilled in the art can easily implement the invention. However, the present invention may be embodied in many different forms and should not be construed as limited to the embodiments set forth herein.

### 1. Positive Electrode Active Material for All-Solid-State Battery

According to one embodiment of the present invention, a positive electrode active material for an all-solid-state battery includes a core and a coating layer disposed on the core.

More specifically, the positive electrode active material includes: a core comprising a lithium transition metal oxide; and a coating layer disposed on the core and comprising a lithium boron oxide,
wherein a molar ratio of lithium to boron (Li:B) in the lithium boron oxide is from 3:7 to 3:9.

The lithium transition metal oxide may contain nickel in an amount of 75 mol% or more, and more specifically 80 mol% or more, based on the total molar amount of transition metals. By including such a sufficient amount of nickel, the capacity of the battery can be increased. However, in the case of such high-nickel layered lithium transition metal oxides, there is a problem in that interfacial reactions with sulfide-based solid electrolytes can lead to the formation of high-resistance layers due to the migration of nickel and cobalt, thereby deteriorating battery performance.

To address this issue, the positive electrode active material according to one embodiment of the present invention includes a coating layer comprising lithium boron oxide. As a result, the formation of a high-resistance interfacial layer can be suppressed, and the charge and discharge capacities of the battery can be improved.

In particular, the molar ratio of lithium to boron (Li:B) in the lithium boron oxide may be from 3:7 to 3:9, and more specifically from 3:7.5 to 3:8.5. Adjusting the Li:B ratio within this range further maximizes the improvement in battery performance.

The lithium boron oxide may be represented by the following Chemical Formula 2:

[Chemical Formula 2] Li₃Bₓ₂O_{γ2}

wherein 7 ≤ x₂ ≤ 9 and 0 < y₂ ≤ 12.

More specifically, x₂ may range from 7.5 to 8.5.

Preferably, the lithium boron oxide may be Li₃B₈Oₓ₃, where x₃ is from 13 to 14.

The content of the coating layer may be from 0.05 wt% to 0.3 wt%, and more specifically from 0.1 wt% to 0.2 wt%, based on the total weight of the positive electrode active material.
If the content of the coating layer is too low, the aforementioned improvement in battery performance may be insufficient. Conversely, if the content is too high, the proportion of active material decreases, leading to reduced battery capacity. Therefore, battery performance can be optimized when the coating layer content falls within the above range.

The coating layer may be disposed conformally over the entire surface of the core (conformal coating), or discontinuously on portions of the core (island coating).
The method for forming the coating layer will be described in detail in the preparation section below.

Hereinafter, the core comprising the lithium transition metal oxide will be described.

The core may be a secondary particle formed by aggregation of a plurality of primary particles. As used herein, the term "primary particle" refers to the smallest distinguishable unit observed as a single particle mass in a cross-sectional view of the active material under a scanning electron microscope (SEM), and may consist of a single grain or multiple grains.

The core may have an oval or spherical shape.

The lithium transition metal oxide may be represented by the following Chemical Formula 1:

[Chemical Formula 1] Liₐ[Niₓ₁Co_{γ1}M₁]O₂

wherein 1.01 ≤ a ≤ 1.07, 0.75 ≤ x₁ ≤ 0.90, 0 ≤ y₁ ≤ 0.20, 0 < z₁ ≤ 0.20, and x₁ + y₁ + z₁ = 1; M is at least one selected from the group consisting of Mn, Al, Mg, Ti, Nb, W, Sc, Zr, Si, V, Fe, Y, and Mo.

In the lithium transition metal oxide of Chemical Formula 1, lithium may be present in an amount corresponding to a, specifically 1.01 ≤ a ≤ 1.07.
If the lithium content is too low, battery capacity may be reduced. If the content is too high, residual lithium such as LiOH or Li₂CO₃ may form on the surface of the positive electrode material, increasing slurry viscosity and causing gas generation during charge/discharge cycles.

Therefore, considering capacity improvement and sinterability during active material preparation, lithium is preferably present in an amount of 1.01 ≤ a ≤ 1.05.

Nickel may be present in an amount corresponding to x₁, specifically 0.75 ≤ x₁ ≤ 0.90. If x₁ is 0.75 or greater, sufficient nickel content is secured to contribute to charge and discharge reactions, enabling higher capacity. More preferably, 0.80 ≤ x₁ ≤ 0.86.

Cobalt may be present in an amount corresponding to y₁, specifically 0 ≤ y₁ ≤ 0.20.
If the cobalt content is too low, it may be difficult to achieve both excellent rate characteristics and high tap density. If the content is too high, material costs increase and reversible capacity may decrease.

M is an element other than lithium, nickel, and cobalt, and may be at least one selected from Mn, Al, Mg, Ti, Nb, W, Sc, Zr, Si, V, Fe, Y, and Mo.
M may be present in an amount corresponding to z₁, specifically 0 < z₁ ≤ 0.20.

The average particle diameter (D50) of the positive electrode active material may be from 1 µm to 10 µm, and more specifically from 2 µm to 9 µm.

If D50 is too large, the interfacial contact area between the solid electrolyte and the active material particles may be reduced. If too small, the required minimum amount of solid electrolyte in the electrode increases, possibly reducing the improvement in charge/discharge capacity.

As used herein, the average particle diameter (D50) refers to the particle diameter at 50% cumulative volume in a particle size distribution curve and may be measured using a laser diffraction method.

The specific surface area of the positive electrode active material may be from 0.4 m²/g to 0.7 m²/g.

If the specific surface area is too low, interfacial contact with the solid electrolyte may decrease. If too high, the required binder content during electrode fabrication may increase, thereby limiting capacity performance.

The specific surface area may be measured using the BET method (Surface Area and Porosity Analyzer, Micromeritics ASAP 2020).

### 2. Method for Preparing Positive Electrode Active Material for All-Solid-State Battery

Another embodiment of the present invention provides a method for preparing a positive electrode active material for an all-solid-state battery, comprising:
preparing a lithium transition metal oxide; preparing a coating solution comprising a lithium precursor and a boron precursor, wherein a molar ratio of lithium to boron (Li:B) is from 3:7 to 3:9; mixing the lithium transition metal oxide with the coating solution to form a mixture; drying the mixture; and calcining the dried mixture to form a coating layer.

The method according to this embodiment will now be described step by step.

First, a lithium transition metal oxide is prepared.

More specifically, the step of preparing the lithium transition metal oxide may include: preparing a transition metal hydroxide; forming a mixture comprising the transition metal hydroxide and a lithium precursor; and calcining the mixture to obtain the lithium transition metal oxide.

The transition metal hydroxide may be obtained, for example, by co-precipitation of a transition metal-containing solution containing a nickel precursor and, optionally, one or more doping precursors selected from cobalt, manganese, Al, Mg, Ti, Nb, W, Sc, Zr, Si, V, Fe, Y, and Mo, by adding an ammonia solution and a sodium hydroxide solution.

The nickel precursor is not particularly limited as long as it is conventionally used for preparing precursors of positive electrode active materials. Examples include nickel-containing sulfates, acetates, nitrates, halides, sulfides, hydroxides, oxides, and oxyhydroxides. Specific examples include NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, fatty acid nickel salts, nickel halides, or combinations thereof.

Similarly, the cobalt precursor is not particularly limited. Specific examples include CoSO₄, CoSO₄·7H₂O, Co(OH)₂, CoOOH, Co(OCOCH₃)₂·4H₂O, Co(NO₃)₂·6H₂O, or combinations thereof.

The manganese precursor may also be selected from commonly used manganese salts such as MnSO₄, MnCO₃, Mn(NO₃)₂, manganese acetate, manganese dicarboxylates, manganese citrate, fatty acid manganese salts, Mn₂O₃, MnO₂, Mn₃O₄, manganese oxyhydroxides, manganese chloride, or combinations thereof.

The lithium precursor may be selected from lithium-containing sulfates, nitrates, acetates, carbonates, oxalates, citrates, halides, hydroxides, or oxyhydroxides. Examples include Li₂CO₃, LiNO₃, LiNO₂, LiOH, LiOH·H₂O, LiH, LiF, LiCl, LiBr, LiI, CH₃COOLi, Li₂O, Li₂SO₄, Li₃C₆H₅O₇, or combinations thereof.

The mixture of the transition metal hydroxide and the lithium precursor may further comprise a doping precursor such as Al, Mg, Ti, Nb, W, Sc, Zr, Si, V, Fe, Y, Mo, or combinations thereof.

Next, a coating solution comprising a lithium precursor and a boron precursor is prepared, wherein the molar ratio of lithium to boron (Li:B) is from 3:7 to 3:9.

The lithium precursor for the coating solution is not particularly limited as long as it can provide lithium ions in solution. Examples include lithium metal, lithium hydroxide, lithium carbonate, lithium alkoxides, or combinations thereof.

Likewise, the boron precursor may include triisopropyl borate, boric acid (H₃BO₃), or combinations thereof.

The coating solution may further include a solvent. The solvent is not particularly limited as long as it can dissolve the lithium and boron precursors and exhibits low reactivity with the lithium transition metal oxide.

The Li:B molar ratio may be more specifically from 3:7.5 to 3:8.5. Controlling the Li:B molar ratio in this manner allows for precise tuning of the Li:B ratio in the resulting lithium boron oxide, thereby enhancing the charge and discharge performance of the final battery.

Next, the lithium transition metal oxide is mixed with the coating solution to form a slurry or mixture.

The mixing may be conducted at a temperature in the range of 25°C to 60°C.

The total amount of coating material applied (after drying and heat treatment) may be from 0.02 wt% to 0.5 wt% based on the total weight of the lithium transition metal oxide. When within this range, the coating layer can be appropriately formed to maximize improvements in battery performance.

Subsequently, the mixture is dried to remove the solvent from the coating solution. Preferably, the drying is performed using a vacuum drying method. Vacuum drying enables rapid solvent removal at relatively low temperatures, thereby facilitating uniform deposition of the coating precursor onto the surface of the active material particles.

Next, the dried mixture is subjected to heat treatment (calcination) to form the coating layer.

The calcination may be performed at a temperature of 250°C to 350°C, and more preferably from 280°C to 320°C.

If the calcination temperature is too low, residual organics may remain. If too high, the coating material may react with or diffuse into the active material, leading to loss of the coating and degradation of the interfacial protection effect against sulfide-based solid electrolytes.

Thus, by maintaining the heat treatment temperature within the above range, the coating layer can be effectively formed, and battery performance can be significantly improved.

### 3. All-Solid-State Battery

Another embodiment of the present invention provides a positive electrode comprising the positive electrode active material for an all-solid-state battery described above.

More specifically, the positive electrode may include a positive electrode current collector and a positive electrode active material layer disposed on the positive electrode current collector, and the positive electrode active material layer may include the aforementioned positive electrode active material for an all-solid-state battery, a sulfide-based solid electrolyte, and a conductive material. The positive electrode active material layer may further include a binder.

The sulfide-based solid electrolyte may be, for example, a sulfide-based solid electrolyte having an argyrodite-type crystal structure.

The sulfide-based solid electrolyte having an argyrodite-type crystal structure may be a compound represented by the following formula:

Li₇₋ₓPS₆₋ₓDₓ (0 ≤ x ≤ 2, where D is F, Cl, Br, I, or a combination thereof).

Specific examples include, but are not limited to, Li₆PS₅Cl, Li₆PS₅Br, and Li₆PS₅I, or combinations thereof.

At least a portion of the crystal structure of the argyrodite-type sulfide solid electrolyte may be doped with a doping element, thereby improving air stability.

The conductive material may include, for example, graphite, carbon black, acetylene black, Ketjen black, channel black, furnace black, lamp black, thermal black, Tokai black, Denka black, Super P, carbon nanotubes, carbon nanofibers, graphene, fullerene, or combinations thereof, but is not limited thereto.

The binder may include, for example, polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, polymethacrylate, ethylene-propylene-diene monomer rubber (EPDM rubber), sulfonated EPDM, styrene-butadiene rubber (SBR), butadiene rubber (BR), nitrile-butadiene rubber (NBR), styrene-butadiene-styrene block copolymer (SBS), styrene-ethylene-butadiene block copolymer (SEB), styrene-(styrene-butadiene)-styrene block copolymer, natural rubber (NR), isoprene rubber (IR), fluororubber, or combinations thereof, without limitation.

In addition to the above-described components, the positive electrode active material layer may further include one or more additives, such as fillers, coating agents, dispersants, or ion-conductive additives.

Another embodiment of the present invention provides an all-solid-state battery comprising: a positive electrode; a negative electrode; and a solid electrolyte layer disposed between the positive electrode and the negative electrode, wherein the positive electrode includes the positive electrode active material described above.

The positive electrode has been described above and will not be repeated here.

The solid electrolyte layer may include a sulfide-based solid electrolyte.

The sulfide-based solid electrolyte may be, for example, a sulfide-based solid electrolyte having an argyrodite-type crystal structure.

Such a solid electrolyte may be represented by the formula: Li₇₋ₓPS₆₋ₓDₓ (0 ≤ x ≤ 2, where D is F, Cl, Br, I, or a combination thereof).

Examples include, but are not limited to, Li₆PS₅Cl, Li₆PS₅Br, Li₆PS₅I, or combinations thereof.

The argyrodite-type sulfide solid electrolyte may be doped with at least one doping element to enhance air stability.

The sulfide-based solid electrolyte included in the positive electrode active material layer and the sulfide-based solid electrolyte included in the solid electrolyte layer may be the same or different.

The solid electrolyte layer may further include a binder.

The binder used in the solid electrolyte layer may include, for example, any of the binders listed above with respect to the positive electrode, and may be the same as or different from the binder used in the positive or negative electrode.

The negative electrode may include a negative electrode current collector and a negative electrode active material layer disposed thereon.

The negative electrode active material layer may include a negative electrode active material.

The negative electrode active material may include a material capable of reversibly intercalating and deintercalating lithium ions, lithium metal, lithium metal alloys, a lithium-doping and de-doping material, or a transition metal oxide.

Examples of reversible lithium-ion intercalation/deintercalation materials include carbonaceous materials, such as crystalline or amorphous carbon materials commonly used in lithium-ion secondary batteries.

Crystalline carbon may include natural or artificial graphite in various forms, such as amorphous, plate-like, flake-like, spherical, or fibrous forms.

Amorphous carbon may include soft carbon (low-temperature calcined carbon), hard carbon, mesophase pitch-based carbon, or calcined coke.

The lithium metal alloys may include alloys of lithium with one or more elements selected from the group consisting of Na, K, Rb, Cs, Fr, Be, Mg, Ca, Sr, Si, Sb, Pb, In, Zn, Ba, Ra, Ge, Al, and Sn.

Examples of lithium-doping and de-doping materials include Si, SiOx (0 < x < 2), Si-Y alloys (where Y is selected from alkali metals, alkaline earth metals, group 13 elements, group 14 elements, transition metals, rare earth elements, or combinations thereof, excluding Si), Sn, SnO₂, Sn-Y alloys (where Y is as defined above, excluding Sn), and mixtures thereof with SiO₂.

Y may include, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or combinations thereof.

Examples of transition metal oxides include vanadium oxides, lithium vanadium oxides, and the like.

The negative electrode active material layer may also include a binder, and optionally a conductive material.

The binder improves adhesion between the particles of the negative electrode active material and between the active material and the current collector. Examples include, without limitation, polyvinyl alcohol, carboxymethyl cellulose, hydroxypropyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resins, and nylon.

The conductive material imparts electrical conductivity to the electrode and may be any electronically conductive material that does not cause chemical changes in the battery.

Examples include carbon-based materials such as natural graphite, artificial graphite, carbon black, acetylene black, Ketjen black, carbon fibers; metal-based materials such as copper, nickel, aluminum, silver powders or fibers; conductive polymers such as polyphenylene derivatives; or mixtures thereof.

Examples of the negative electrode current collector include copper foil, nickel foil, stainless steel foil, titanium foil, nickel foam, copper foam, and polymer substrates coated with a conductive metal, or combinations thereof.

Hereinafter, embodiments of the present invention will be described in greater detail through the following examples. However, these examples are provided merely to illustrate the invention and are not intended to limit the scope of the present invention.

### Example 1: Li₃B₈Oₓ₃ (x₃ = 13-14) Coating

### (1) Preparation of Positive Electrode Active Material

A lithium transition metal oxide of LiNi_{0.83}Co_{0.12}Mn_{0.05}O₂ was prepared.

Next, lithium metal and triisopropyl borate (C₉H₂₁BO₃) were added to an ethanol solvent to form a coating solution, adjusting the molar ratio of lithium to boron (Li:B) to 3:8.

Then, the lithium transition metal oxide was mixed with the coating solution to form a mixture. The final content of the coating material remaining after drying and calcination was 0.1 wt% based on the total weight of the lithium transition metal oxide.

The mixture was vacuum-dried for 1 hour.

Subsequently, the dried mixture was calcined at 300°C to prepare a positive electrode active material having a Li₃B₈Oₓ₃ (x₃ = 13-14) lithium boron oxide coating layer formed on the surface.

### (2) Fabrication of Lithium Secondary Battery

The prepared positive electrode active material (68 wt%) was mixed with 29 wt% of argyrodite-type solid electrolyte and 3 wt% of Super C65 (as a conductive additive) to form a composite powder.

An all-solid-state cell jig was prepared by first placing a predetermined amount of the argyrodite solid electrolyte (as a separator function) and compressing it at a pressure of 300 MPa or more to a thickness of approximately 100 µm. Then, 10 mg of the positive electrode composite powder was added to one side, followed by a second compression step to form the positive electrode layer.

Thereafter, a Li-In alloy was placed on the opposite side, and an appropriate pressure was applied to fabricate an all-solid-state battery cell for evaluation.

### Example 2: Li₃B₈Oₓ₃ (x₃ = 13-14) Coating

The positive electrode active material and lithium secondary battery were prepared in the same manner as in Example 1, except that the amount of coating solution added was adjusted to 0.2 wt% based on the total weight of the lithium transition metal oxide.

### Example 3: Li₃B₈Oₓ₃ (x₃ = 13-14) Coating

The positive electrode active material and lithium secondary battery were prepared in the same manner as in Example 1, except that the amount of coating solution added was adjusted to 0.3 wt% based on the total weight of the lithium transition metal oxide.

### Comparative Example 1: Li₂ZrO₃ Coating

The positive electrode active material and lithium secondary battery were prepared in the same manner as in Example 1, except that Li₂ZrO₃ was used as the coating material instead of Li ₃B₈Oₓ₃.

### Comparative Example 2: Li₃B₆O_{γ} (y = 10-11) Coating

The positive electrode active material and lithium secondary battery were prepared in the same manner as in Example 1, except that the coating solution was prepared with a Li:B molar ratio of 3:6.

### Comparative Example 3: Li₃B₁₀Oz (z = 16-17) Coating

The positive electrode active material and lithium secondary battery were prepared in the same manner as in Example 1, except that the coating solution was prepared with a Li:B molar ratio of 3:10.

### Experimental Example 1: Evaluation of Initial Capacity and Initial Efficiency of Lithium Secondary Battery

The initial capacity and initial efficiency of the lithium secondary batteries prepared in the above Examples and Comparative Examples were evaluated, and the results are shown in Table 1 and FIG. 1.

The detailed experimental method is as follows.

Each fabricated all-solid-state battery cell was mounted onto a charge-discharge tester, and charge/discharge characteristics were evaluated at 30°C.

During the first cycle, charging was performed using a constant current-constant voltage (CC-CV) mode at a current density of 0.1C. The cutoff voltage for charging was set at 3.7 V, and the termination current was set at 0.02C.

Discharging was conducted using a constant current mode at 0.1C, with a cutoff voltage of 1.9 V.

The charge capacity, discharge capacity, and initial efficiency were measured accordingly.

**[Table 1]**

| | Coating Composition | Coating Content (wt%) | Charge Capacity (mAh/g) | Discharge Capacity (mAh/g) | Initial Efficiency (%) |
|---|---|---|---|---|---|
| Example 1 | Li₃B₈Oₓ₃(x3=13∼14) | 0.1 | 221.4 | 207.5 | 93.8 |
| Example 2 | Li₃B₈Oₓ₃(x3=13∼14) | 0.2 | 223.1 | 209.3 | 93.8 |
| Example 3 | Li₃B₈Oₓ₃(x3=13∼14) | 0.3 | 218.5 | 203.0 | 92.9 |
| Comparative Example 1 | L₂ZrO3 | 1.0 | 217.9 | 205.8 | 94.4 |
| Comparative Example 2 | Li₃B₆O_{y}(y=10∼11) | 0.1 | 212.2 | 192.8 | 91.3 |
| Comparative Example 3 | Li₃B₁₀O_{z}(z=16~17) | 0.1 | 217.3 | 197.3 | 90.8 |

Referring to Table 1, it was confirmed that in Examples 1 to 3, in which a lithium boron oxide coating layer was formed on the surface of the active material and the molar ratio of lithium to boron (Li:B) was appropriately controlled, excellent initial charge capacity, discharge capacity, and initial efficiency were achieved.

In contrast, Comparative Example 1, which employed a conventional lithium zirconium oxide coating instead of lithium boron oxide, showed significantly inferior charge and discharge capacities.

Furthermore, even when a lithium boron oxide coating layer was present, Comparative Examples 2 and 3, in which the molar ratio of lithium to boron (Li:B) deviated from the optimal range defined by the present invention, exhibited degraded charge capacity, discharge capacity, and initial efficiency.

This confirms that even with the same lithium boron oxide coating, the electrochemical performance of the battery can be more favorably realized by adjusting the Li:B molar ratio within the appropriate range.

In addition, with respect to the relationship between the content of the coating layer and battery performance, it was confirmed that Examples 1 to 3, in which the coating content was suitably adjusted, exhibited excellent overall battery performance.

The foregoing description illustrates preferred embodiments of the present invention. However, it should be understood that the present invention is not limited thereto and may be practiced in various other forms without departing from the spirit and scope of the invention, as defined in the appended claims and the detailed description and drawings provided herein.

Accordingly, the true scope of protection of the present invention shall be defined by the appended claims and their equivalents.

## Claims

1. A positive electrode active material for an all-solid-state battery, comprising:
a core comprising a lithium transition metal oxide; and
a coating layer disposed on the core and comprising a lithium boron oxide,
wherein a molar ratio of lithium to boron (Li:B) in the lithium boron oxide is from 3:7 to 3:9.

2. The positive electrode active material of claim 1,
wherein the lithium transition metal oxide comprises nickel in an amount of 75 mol% or more based on the total molar amount of transition metals.

3. The positive electrode active material of claim 1,
wherein the core is a secondary particle formed by agglomeration of a plurality of primary particles.

4. The positive electrode active material of claim 1,
wherein the lithium transition metal oxide is represented by the following Chemical Formula 1:
[Chemical Formula 1] Liₐ[Niₓ₁Co_{γ1}M₁]O₂
wherein 1.01 ≤ a ≤ 1.07, 0.75 ≤ x₁ ≤ 0.90, 0 ≤ y₁ ≤ 0.20, 0 < z₁ ≤ 0.20, and x₁ + y₁ + z₁ = 1;
M is at least one selected from the group consisting of Mn, Al, Mg, Ti, Nb, W, Sc, Zr, Si, V, Fe, Y, and Mo.

5. The positive electrode active material of claim 1,
wherein the lithium boron oxide is represented by the following Chemical Formula 2:
[Chemical Formula 2] Li₃Bₓ₂O_{γ2}
wherein 7 ≤ x₂ ≤ 9, and 0 < y₂ ≤ 12.

6. The positive electrode active material of claim 1,
wherein the lithium boron oxide is Li₃B₈Oₓ₃,
and x₃ is from 13 to 14.

7. The positive electrode active material of claim 1,
wherein the content of the coating layer is from 0.05 wt% to 0.3 wt% based on the total weight of the positive electrode active material.

8. The positive electrode active material of claim 1,
wherein an average particle diameter (D50) of the positive electrode active material is from 1 µm to 10 µm.

9. The positive electrode active material of claim 1,
wherein a specific surface area of the positive electrode active material is from 0.4 m²/g to 0.7 m²/g.

10. A method for preparing a positive electrode active material for an all-solid-state battery, comprising:
preparing a lithium transition metal oxide;
preparing a coating solution comprising a lithium precursor and a boron precursor, wherein a molar ratio of lithium to boron (Li:B) is from 3:7 to 3:9;
mixing the lithium transition metal oxide with the coating solution to form a mixture;
drying the mixture; and
calcining the dried mixture to form a coating layer.

11. The method of claim 10,
wherein the lithium precursor in the step of preparing the coating solution is selected from the group consisting of lithium metal, lithium hydroxide, lithium carbonate, lithium alkoxide, and combinations thereof.

12. The method of claim 10,
wherein the boron precursor in the step of preparing the coating solution is selected from the group consisting of triisopropyl borate, boric acid (H₃BO₃), and combinations thereof.

13. The method of claim 10,
wherein the drying of the mixture is performed by vacuum drying.

14. The method of claim 10,
wherein the calcining is performed at a temperature of 250°C to 350°C.

15. A positive electrode comprising the positive electrode active material according to any one of claims 1 to 9.

16. An all-solid-state battery comprising:
a positive electrode;
a negative electrode; and
a solid electrolyte layer interposed between the positive electrode and the negative electrode,
wherein the positive electrode comprises the positive electrode active material according to any one of claims 1 to 9.
